# EUROPEAN PATENT APPLICATION

(11) **EP 3 659 733 A1**
(43) Date of publication of application: **03.06.2020**
(21) Application number: 18460080.7
(22) Date of filing: 21.12.2018
(51) Int. Cl.: B23B 51/00, B27G 15/00

(54) **DRILL BIT WITH DOUBLE CUTTERS**

(30) Priority: 27.11.2018 PL 42793118
(71) Applicant: P.H.M. POLCOMM Dariusz Kozak, 21-100 Libartów (PL)
(72) Inventor: Karski, Rafal, 30-399 Kraków (PL)
(74) Representative: Wozniak, Jolanta

(57) **Abstract**

Drill bit equipped with a chipper bevel and plates with cutting edges is characterised by having a chipper bevel (4) with a conical tip and no less than two cutter plates (5) with the edge of the cutter (7) shaped in the layer made of polycrystalline diamond (PCD), of geometry created from the lateral surface of the cone, whereas the cone angle is within the range of 0.5 and 2 degrees, so that the entire external surface of the cutter plate (5) is contained in the surface of the cone and not just its cutting edge (5). The drilling edge is made of a cutting edge (6) of the chipping bevel (4) and edges of cutter blades (7) of the cutter plate (5) distributed on both sides and connected on axial central line of the body of the bit (1). The centre spur (3) is attached to the body of the bit (1) with grub screws (2).

## Description

The subject of the invention is a drill bit with double cutters, the blades of which with cutter plates are made of polycrystalline diamond (**PCD**)

There is a known drill bit of conventional description number 0001347-4 SE, PL196746 which has a tips forming a blade with at least two cutting edges and at least two chip flutes emerging from the blade tip towards the other end which form chips and remove them from their respective cutting edges. In accordance with the invention, the blade of the bit is made of cutting edges distributed on both sides and interconnected on axial central line, with a simple outline, without gaps, the parts of which located in the centre are moved to the front in relation to the outlying parts, whereas the frontal radial surface of each cutting edge, located by the edge, is formed as a smooth radial rounding, containing one or several circular segments, with interconnected radii (R₁, R₂, R₃) and of different size, whereas the adjacent radii always have different dimensions.

Also known from Polish patent description PL207657 is the spiral bit intended for drilling in walls, concrete, stone and other hard materials. The spiral bit contains a drill head with a socket and a cutting plate, body with two double spirals and a shank, which is characterised by having a head with two sockets, perpendicular to each other, in which they are placed by the means of welding, main drill plate and two additional support drill plates, whereas the man plate and the support ones form a shape of a cross. Drill plates are equipped with crushing plates and lateral surfaces.

In turn, in accordance to the German description DE 10241841 there is a double cutter bit with a body rotating around the axis in which placed are two sockets for placing cutter plates of identical shape. Each of the replaceable cutter plates has a single rake and a clearance surface, connected along the main cutting edge forming the wedge of the blade. Main cutting edges of replaceable cutter plates are complimentary to each other in the central area of the bent part, forming a transverse blade, separated by a central gap. The goal of the invention is decreasing the danger of cracking in the central area of replaceable cutter plates and improved handling of the tool. For that purpose the invention was designed in a way that the cutter plates have an angled leading haunch on their clearance surface from the peak line to the central corner of the plate, whereas the clearance surface are in a radially external area angled positively towards the direction of feed, and negatively in the area of their leading haunches.

However, from the submission of a Polish patent description P.405432 there is a mention of a drill-reamer which has a blade with a main cutting edge and support even-numbered teeth cutting edge and a support odd-numbered teeth cutting edge. The element connecting the two main cutting edges is the chisel. Between the chisel and the support odd-numbered teeth cutting edge there are notches. From the main cutting edge emerge chip flutes, which are connected to the grip. Along the chip flute there is a cylindrical surface.

The goal of the invention is construction of a drill bit equipped with a main blade and cutter blades made of polycrystalline diamond (PCD) of a geometry which fits the entirety of the surface area of the cone and not just its cutting edge.

Drill bit equipped with a chipper bevel and plates with cutting edges is characterised by having a chipper bevel with a conical tip and no less than two cutter plates with the edge of the cutter shaped in the layer made of polycrystalline diamond (PCD), of geometry created from the lateral surface of the cone, whereas the cone angle is within the range of 0.5 and 2 degrees, so that the entire external surface of the cutter plate is contained in the surface of the cone and not just its cutting edge whereas the blade of the bit as composed of the cutting edge of the chipper bevel and the edge of the cutter plate distributed on both sides and interconnected on axial central line of the body of the bit. The centre spur is conveniently attached to the body of the bit with grub screws.

The drilling edge is made of a cutting edge of the main blade and edges of cutter blades of the cutter plate distributed on both sides and interconnected on axial central line of the body of the bit.

The design of the blade's geometry in accordance with the invention was made on a PCD layer of the lateral surface of the cone, where the diameter of the base of the cone is equal to the nominal diameter of the bit and the cone angle is within the range of 0.5 and 2 degrees. As a result, the geometry of the bit, in accordance with the invention, makes it so that cutting forces Fn are transmitted along the PCD layer.

In accordance with the invention, the bit is made of no less than two cutter blades and no less than one chipping bevel (main blade) and one centre spur.

The advantage of the bit, in accordance with the invention, is that although the cutter blade can cut material at a small depth but with very little friction. The layer of previously separated material with the cutter blade is peeled with the chipper bevel (main blade). An appropriate number and distribution of cutter blades in relation to the chipper bevel (main blade) reduces the cutting force Fn to a minimum and increases lifetime of the tool.

The advantage of the design of the bit is the geometry of its blade implemented on its PCD blades, in particular the geometry of cutters, which is the result of making the lateral surface of the cone in a way that the entirety of the external surface of the cutter, and not just its cutting edge, fits within the lateral surface of the cone.

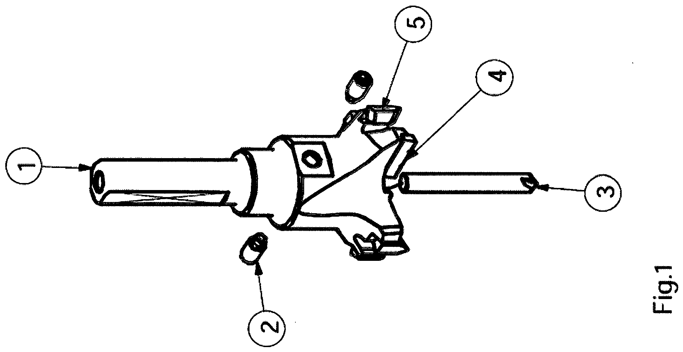

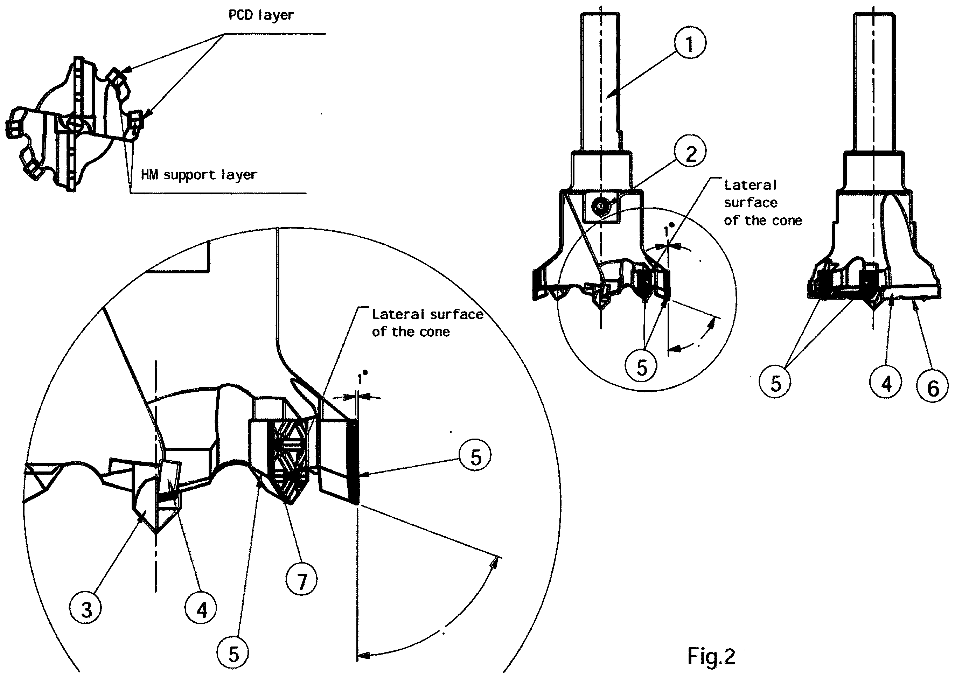

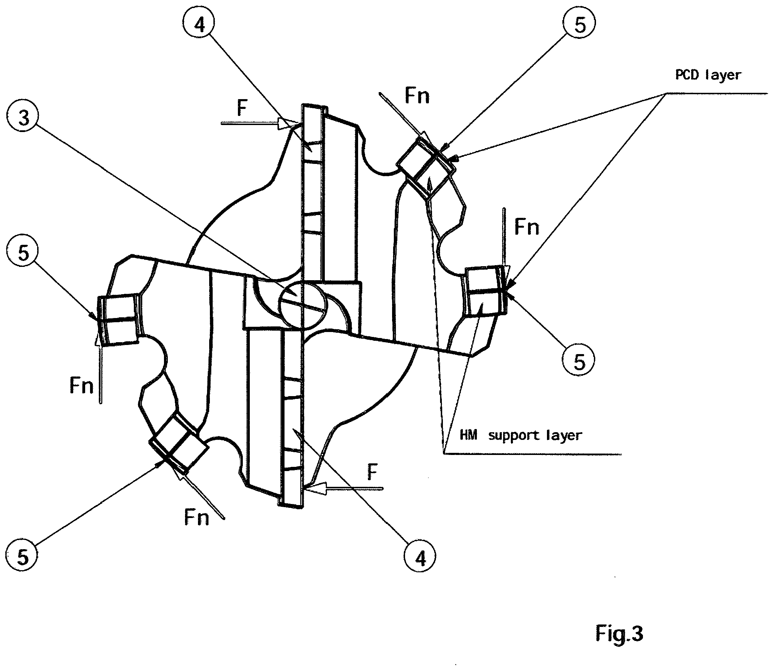

The example design of the bit is presented in the schematic drawing (fig. 1, fig. 2) and in the view from the frontal side (fig. 2).

The body of the bit (1) is equipped with a chipper bevel (4) with a cutting edge (6) and four cutter edges (5) of cutting edge of the blade (7). The bit has a centre spur (3) attached to the body with grub screws (2). The layer of previously separated material with the cutter blade (5) is peeled with the cutting edge (6) of the chipper bevel (4). An appropriate number and distribution of cutter blades (5) in relation to the chipper bevel (4) reduces the cutting force Fn to a minimum and increases lifetime of the tool.

### List of designations:

- 1.: Body
- 2.: Grub screw
- 3.: Centre spur
- 4.: Chipper bevel
- 5.: Cutter
- 6.: Cutting edge of the chipper bevel
- 7.: Cutting edge of the cutter

## Claims

1. Drill bit equipped with a chipper bevel and plates with cutting edges **characteristic due to** a chipper bevel (4) with a conical tip and no less than two cutting plates (5) with the edge of the cutter (7) shaped in the layer made of polycrystalline diamond (PCD), of geometry created from the lateral surface of the cone so that the entire external surface of the cutting plate (5) is contained in the surface of the cone and not just its cutting edge (5).

2. The bit, in accordance with claim 1, **is characteristic due to** the fact that the drilling edge is made of a cutting edge (6) of the chipping bevel (4) and cutting edges (7) of the cutter plate (5) distributed on both sides and interconnected on axial central line of the bit (1).

3. The bit in accordance with claim 1, **is characteristic due to** having centre spur (3) attached to the body (1) of the bit with grub screws (2).
